# EUROPEAN PATENT APPLICATION

(11) **EP 4 328 901 A1**
(43) Date of publication of application: **28.02.2024**
(21) Application number: 22790948.8
(22) Date of filing: 14.04.2022
(51) Int. Cl.: G10H 1/34, G09B 15/00

(54) **MUSICAL INSTRUMENT TEACHING SYSTEM AND METHOD, AND READABLE STORAGE MEDIUM**

(30) Priority: 19.04.2021 CN 202110419369
(71) Applicant: Vong, Chi Kin, Macao 999078 (CN)
(72) Inventor: Vong, Chi Kin, Macao 999078 (CN)
(74) Representative: Boult Wade Tennant LLP
(86) International application number: PCT/CN2022/086812
(87) International publication number: WO 2022/222840

(57) **Abstract**

Disclosed are a musical instrument teaching system and method, and a readable storage medium. The musical instrument teaching system includes: a training module arranged at a musical instrument and configured to acquire a training signal generated by a playing action of a student on the musical instrument during performance; a storage module configured to store a reference signal generated by a playing action on the musical instrument; a processing module configured to generate a correction signal for correcting the playing action of the student based on a comparison between the training signal and the reference signal, where the correction signal is associated with at least one correction action; and a correction module arranged at the musical instrument and configured to : receive the correction signal from the processing module; and visually present the correction signal to the student, to assist the student in performing a corresponding correction action. The present disclosure enables a student to receive instructions reflected to the musical instrument in real time during independent training.

## Description

### CROSS-REFERENCE TO RELATED APPLICATION

This application claims priority to Chinese patent application No. 2021104193696 titled "MUSICAL INSTRUMENT TEACHING SYSTEM AND METHOD, AND READABLE STORAGE MEDIUM" filed on April 19, 2021.

### TECHNICAL FIELD

The present disclosure generally relates to the field of music teaching. More specifically, the present disclosure relates to a musical instrument teaching system and method, and a computer-readable storage medium.

### BACKGROUND OF THE INVENTION

The conventional musical instrument teaching usually adopts the manner in which a teacher teaches a student face-to-face. With the development of the Internet technology, online teaching has become a new method for musical instrument teaching, which mainly has three modes: 1. a teacher explains a teaching material through a live video, and a student exercises on his/her own musical instrument, and then the teacher watches and listens to performance of the student, and guides the student remotely through video; 2. a pre-recorded video of a teacher explaining a teaching material is played, and a student exercises on his/her own musical instrument, without the teacher watching or listening to performance of the student; or 3. a video of a teacher explaining a teaching material is played, where the video contains operation instructions for playing the musical instrument, and a student plays the musical instrument at corresponding positions according to the instructions in the video.

These conventional and online musical instrument teaching modes all have some disadvantages. Specifically speaking, the conventional teaching mode requires presence of both the teacher and the student at the same time, which is inconvenient for the student to practice alone without on-site guidance of the teacher. In contrast, the online teaching mode cannot offer visual guidance information directly embodied on the musical instrument to the student, and thus cannot enable actual remote interactive teaching, leading to limited improvement on the capability of the student in terms of playing the musical instrument.

### SUMMARY OF THE INVENTION

To at least address one or more of the above problems in the background art, the present disclosure provides a musical instrument teaching system and method, and a computer-readable storage medium. With the solution provided in the present disclosure, a student practicing playing a musical instrument can find deficiencies or places where improvements are need in his/her playing in real time, so that the learning effect can be greatly improved. On this basis, the present disclosure provides, in various aspects, various solutions as follows.

In one aspect, the present disclosure discloses a musical instrument teaching system. The musical instrument teaching system includes: a training module arranged at a musical instrument and configured to acquire a training signal generated by a playing action of a student on the musical instrument during performance; a storage module configured to store a reference signal generated by a playing action on the musical instrument; a processing module configured to generate a correction signal for correcting the playing action of the student based on a comparison between the training signal and the reference signal, wherein the correction signal is associated with at least one correction action; and a correction module arranged at the musical instrument and configured to : receive the correction signal from the processing module; and visually present the correction signal to the student, to assist the student in performing a corresponding correction action.

In one embodiment, the correction module includes a light-emitting assembly arranged at the musical instrument and configured to indicate different correction actions to the student with different light-emitting patterns.

In another embodiment, the correction signal includes a correction signal for correcting one or more of a position, a force, or a rhythm of the playing action of the student on the musical instrument.

In yet another embodiment, the training module includes a detection circuit arranged in a playing or striking area zone of the musical instrument and configured to detect a playing action of the student in the playing or striking area zone and generate a corresponding training signal.

In one embodiment, the detection circuit includes one or more of: a vibration sensor, a micro-electromechanical system (MEMS) sensor, a magnetic induction circuit, a capacitive induction circuit, an ultrasonic sensor, or an optical sensor.

In another embodiment, the training module includes a timer configured to collect a rhythm signal generated by the playing action of the student in the playing or striking area zone.

In yet another embodiment, the correction module has a shape that conforms to the musical instrument, and is removably connected to the musical instrument.

In one embodiment, the musical instrument teaching system further includes a display terminal configured to output playing instruction information and/or a correction signal to the student to guide performance of the student, wherein the storage module and/or the processing module are arranged at a cloud server.

In another aspect, the present disclosure further discloses a musical instrument teaching method. The method includes: collecting a training signal generated by a playing action of a student on a musical instrument during performance; generating a correction signal for correcting the playing action of the student based on the training signal and a reference signal, wherein the correction signal is associated with at least one correction action, and the reference signal is a signal generated by a playing action on the musical instrument; and receiving the correction signal at the musical instrument, and visually presenting the correction signal to the student, to assist the student in performing a corresponding correction action.

In another aspect, the present disclosure further discloses a computer-readable storage medium including program instructions for musical instrument teaching stored thereon which, when executed by a processor, cause the musical instrument teaching method as described above to be implemented.

With the solutions and embodiments thereof described in the above aspects of the present disclosure, a student using the system of the present disclosure can practice a musical instrument alone without a teacher's tutoring on site. During the training process, a student can learn about his/her performance (such as the playing accuracy, whether there is any error and the reason for the error) in real time and accurately through the correction module in the inventive system. Further, through the correction module, the student can also know how to overcome the error and improve his/her performance level in a targeted manner. In addition, the correction mode in the inventive system instructs a student in a visual manner, so that the student can well understand how to correct his/her error in playing, thereby improving his/her performance level.

### BRIEF DESCRIPTION OF THE DRAWINGS

The above features of the present disclosure will be better understood and numerous objects, features, and advantages thereof will become apparent to those skilled in the art by reading the following detailed description with reference to the accompanying drawings. The drawings in the following description are merely some embodiments of the present disclosure, and other drawings may be derived from these drawings by those of ordinary skill in the art without any creative layer, in which:
FIG. 1 is a block diagram showing composition of a musical instrument teaching system according to an embodiment of the present disclosure;
FIG. 2 is a block diagram showing composition of a musical instrument teaching system according to another embodiment of the present disclosure;
FIG. 3 is an exemplary structural diagram of a keyboard zone of a keyboard instrument according to an embodiment of the present disclosure;
FIG. 4 is an exemplary structural diagram of a striking zone of a percussion instrument according to an embodiment of the present disclosure;
FIG. 5 is an exemplary block diagram of a light-emitting assembly according to an embodiment of the present disclosure; and
FIG. 6 is a flowchart of an instrument teaching method according to an embodiment of the present disclosure.

### DETAIL DESCRIPTION OF THE INVENTION

The technical solutions provided in the embodiments of the present disclosure will be described clearly and completely below with reference to the accompanying drawings in the embodiments of the present disclosure. Obviously, the described embodiments are part, but not all, of the embodiments of the present disclosure. All other embodiments, which can be obtained by those of ordinary skill in the art from the embodiments of the present disclosure without any creative effort, shall fall within the protection scope of the present disclosure.

With the development of the Internet technology, online teaching has become a new method for musical instrument teaching. Compared with the conventional teaching method, online remote video teaching does not require a teacher and a student to present at the same place to carry out teaching activities any more, but still has the problem that the teacher cannot comprehensively obtain specific operation information of the student during performance, such as the specific playing position, force and the like. Such subtle information cannot be accurately obtained through the online remote video, and the student cannot obtain guidance directly at the musical instrument. Based on the above background, the present disclosure designs a musical instrument teaching system. By improving the musical instrument in the system, for example, by arranging a plurality of modules for collecting playing signals and correcting playing actions at the musical instrument, the system of the present disclosure can learn performance conditions of the student during training in real time, and intuitively and timely guide the student, thereby improving his/her performance level.

Various embodiments of the present disclosure will be described in detail below with reference to the accompanying drawings.

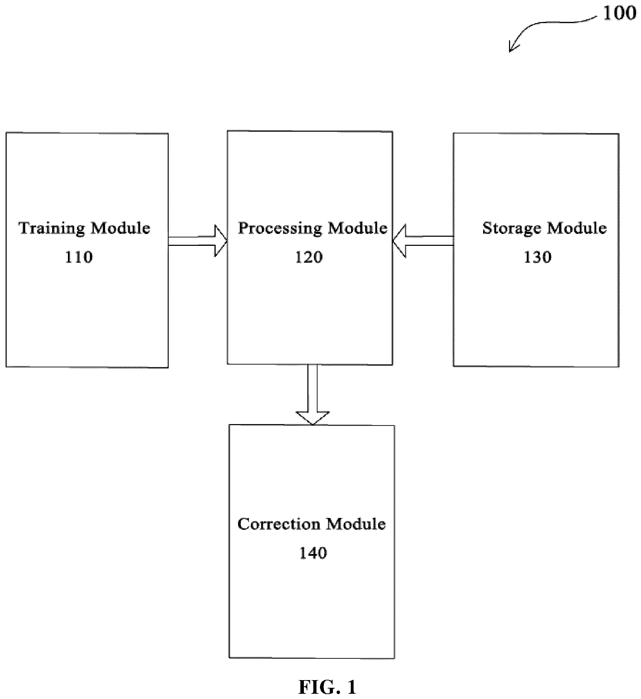

FIG. 1 is a block diagram showing composition of a musical instrument teaching system 100 according to an embodiment of the present disclosure.

As shown in FIG. 1, the musical instrument teaching system 100 of the present disclosure may include a training module 110, a processing module 120, a storage module 130, and a correction module 140. In one embodiment, the training module may be arranged on a musical instrument, and configured to collect a training signal generated by a playing action of a student on the musical instrument during performance in real time. The storage module is configured to store a reference signal generated by a playing action on the musical instrument. The processing module is configured to generate a correction signal for correcting the playing action of the student based on a comparison between the training signal and the reference signal. The correction signal is associated with at least one correction action, and the correction action may include, for example: pressing a key, striking a drumhead, or plucking a string, or the like. The correction module is arranged on the musical instrument, and configured to receive the correction signal from the processing module and then visually present the correction signal to the student, to instruct the student to perform a corresponding correction action.

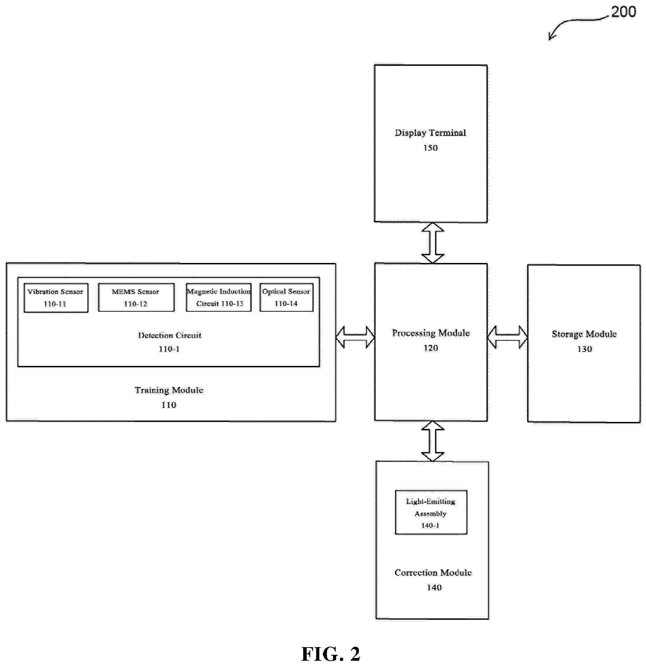

FIG. 2 is a block diagram showing composition of a musical instrument teaching system 200 according to another embodiment of the present disclosure.

As shown in FIG. 2, the musical instrument teaching system 200 may include a training module 110, a processing module 120, a storage module 130, and a correction module 140. In one implementation, the training module 110 may include a detection circuit 110-1 configured to detect a playing action of a student in a playing or striking area zone of the musical instrument and generate a corresponding training signal. In one embodiment, the detection circuit may include one or more of a vibration sensor 110-11, an MEMS sensor 110-12, a magnetic induction circuit 110-13, or an optical sensor 110-14, to sense or detect a playing action of the student on the musical instrument. According to different implementation scenarios, the detection circuit may be arranged under a playing or striking area zone of the musical instrument, for example, under keys of a keyboard instrument or under a drumhead of a percussion instrument, to obtain information such as a force, a position or a time point of a key being pressed or the drumhead being beat or the like in real time.

In one embodiment, the reference signal stored in the storage module 130 may be generated in the following method: first, a demonstration signal set is acquired. In one implementation scenario, a certain piece of music may be played by a veteran player on a musical instrument equipped with the training module of the present disclosure, and a demonstration signal is generated each time the player makes a playing action (such as press, beat, or touch) on the musical instrument. As a result, each time the piece of music is played, a demonstration signal set for the piece of music is generated, and this demonstration signal set is the demonstration signal set for that piece of music. After multiple times of playing, a plurality of demonstration signal sets for the piece of music can be obtained through the training module. Next, reference signals may be generated based on the plurality of demonstration signal sets. In one implementation, the plurality of demonstration signal sets may be used as samples to perform normal distribution processing on the demonstration signal for each playing action, so that a reference signal set (the reference signals in the context of the present disclosure) for performing that piece of music can be obtained.

It will be understood that since the training module of the present disclosure is used to collect signals, the above-mentioned demonstration signal set and the reference signals obtained later may be each regarded as a set of playing signals generated by corresponding playing actions on the musical instrument at different time points. Further, the reference signal obtained in the above manner may be regarded as a playing action that is standard or recognized by a professional person. In addition, the method for obtaining the reference signal described above is merely exemplary and not restrictive, and different methods may be adopted according to different application scenarios or actual conditions. For example, a piece of music played by a performance teacher using the training module of the present disclosure may be directly used as reference signals to correct performance deficiencies of the student.

In one embodiment, the processing module 120 described above may be composed of a chip or circuit with analyzing, determining and computing capabilities, and the specific workflow of the processing module 120 may be exemplarily performed as follows: first, the training signals collected during performance of the student are subjected to comparative analysis with the reference signals discussed above. According to different implementations, the comparative analysis here may relate to a playing duration of the piece of music. Taking a student playing the marimbas as an example, when the student uses the marimbas to practice a four fourths score of one minute long, each beat lasts for one second, and the training module of the present disclosure records a training signal at each beat. When the one-minute performance is completed, the training signals collected by the training module during the one minute may be subjected to comparative analysis with the reference signals. The comparative analysis may be performed on a second-by-second or beat-by-beat basis. In other words, comparative analysis is performed on the training signal and the reference signal at each beat. Assuming that the standard number of reference signals within one minute is 60 and the number of training signals collected by the training module is 50, then the processing module determines, based on a comparison of the numbers, that the student has made a mistake within the one minute, and thereby generates a corresponding correction signal. The performance duration for the comparative analysis may be adjusted according to the ability of the student. For example, for a junior student, the comparative analysis may be performed immediately at the end of each note, and a correction signal may be generated. However, for a senior student (who tends to have less mistakes than a junior student), the processing module may perform the comparative analysis at the end of the whole piece of music to generate a correction signal. Finally, the processing module may transmit the correction signal generated by comparing with the reference signal to the correction module.

Taking a student practicing striking area a drum as another example, when the striking area force and/or position of the student on the drumhead are incorrect, the training module of the present disclosure will generate a training signal different from the reference signal. In other words, the training module will acquire a training signal that contains information on the erroneous force and/or position of the student during striking area. Next, based on a remotely located processing module for example, the training signal may be compared in the time dimension and/or coordinate dimension with a previously stored reference signal, to generate a correction signal of the correct striking area force and/or position on the drumhead.

It can be seen that in the above exemplary workflow, the processing module functions as if a teacher compares playing actions of the student with standard playing actions to find an incorrect action of the student. Further, it is possible to give correct guidance for the incorrect playing action, as well as an additional overall evaluation.

In one implementation, the correction module 140 may include a light-emitting assembly 140-1, which may correct an action of the student by emitting light from the light-emitting assembly. For example, the student should press a certain key at a certain time point, but the key is not pressed at the prescribed time point due to an erroneous action of the student. In this case, the light-emitting assembly disposed above that key will be lit up to remind the student that the correct action should be pressing the key.

It will be understood that the visual correction signal communicated to the student corresponds to advices given by a teacher for the incorrect action of the student. In this manner, the student can receive intuitive guidance opinions directly fed back to the musical instrument in real time during independent training. Because the actual playing action information of the student comes from the musical instrument rather than other ways, the collected actual playing action information of the student is more accurate, and therefore, the correction signal fed back to the student is more accurate and effective for correcting deficiencies in performance of the student. In addition, the guidance opinions are formed on the basis of actual playing action information of the student, and therefore are more targeted, resulting in a better training guidance effect.

According to different implementation scenarios, the musical instrument teaching system 200 of the present disclosure may further include a display terminal 150 configured to output playing instruction information and/or a correction signal to the student to guide performance of the student. Alternatively, the playing instruction information and/or correction signal may be a text signal, an audio signal, a video signal, or a combination thereof.

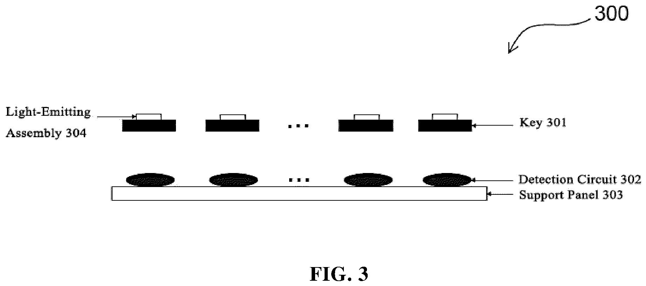

FIG. 3 is a structural diagram of a keyboard zone 300 of a keyboard instrument according to an embodiment of the present disclosure.

As shown in FIG. 3, the keyboard zone 300 of the keyboard instrument in the embodiment of the present disclosure may include a key 301, a detection circuit 302, a support panel 303, and a light-emitting assembly 304. Specifically, the detection circuit 302 arranged under the key 301 in FIG. 3 is a vibration sensor. Further, the vibration sensor is disposed above the support panel 303. In addition, the light-emitting assembly 304 is arranged above the key.

In one embodiment, when the key is touched, the vibration sensor under the key will acquire a corresponding mechanical vibration amount, which is received by a mechanical part of the vibration sensor to form another mechanical vibration amount suitable for transform. Finally, the mechanical vibration amount is converted into an electric signal by an electromechanical conversion part of the vibration sensor. Further, the training module may obtain a position of the touched key through a serial number of the vibration sensor, obtain a touching force on the key through the electric signal output from the vibration sensor, and further output a position signal and a force signal. In this case, the training signal collected by the detection circuit includes the position signal and the force signal.

In a different application scenario, the detection circuit may be one or more of a pressure sensor, a magnetic induction circuit, a capacitive induction circuit, an ultrasonic sensor, or an optical sensor, where the type, number, and layout of detection circuits may be configured according to the type of the musical instrument. For example, for guitar, zheng and other stringed instruments, the detection circuit may be an optical sensor that senses a position and a time point at which a string is plucked through changes in light near the string. In addition, the detection circuit for a percussion instrument may be a magnetic induction circuit or the like.

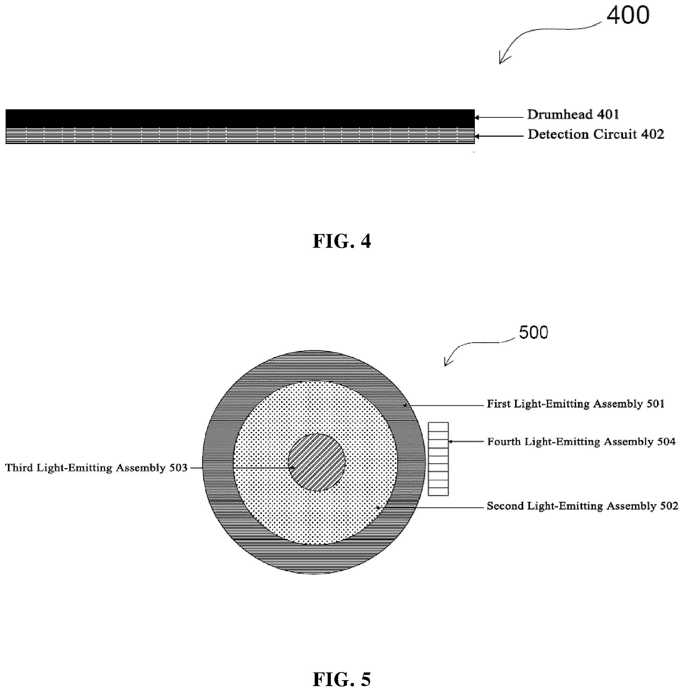

FIG. 4 is a structural diagram of a striking zone 400 of a percussion instrument according to an embodiment of the present disclosure.

As shown in FIG. 4, the striking zone 400 of the percussion instrument according to the present embodiment may include a drumhead 401, a detection circuit 402, a support panel, and the like, where the detection circuit may be disposed immediately under the drumhead to better detect a signal generated by a student striking the drumhead.

As shown in FIG. 4, in one embodiment, the detection circuit 402 in FIG. 4 may be a magnetic induction zone. In one scenario, each magnetic induction zone may include a magnetic induction circuit to generate the associated magnetic induction signal when the magnetic induction zone is triggered. The magnetic induction circuit may include a circuit consisting of magnetic induction coils (which are represented by grids in FIG. 4). When the magnetic induction coils are electrified, based on the electromagnetic induction principle, an excitation alternating electromagnetic field is generated in the magnetic induction zone. Further, when the magnetic induction zone is triggered, the magnetic flux in the alternating magnetic field changes, and the training module may obtain a position of the magnetic induction zone through calculation based on the change in magnetic flux, and then output a position signal.

Further, the training module may determine an actual operating manner of the student by calculating the change in magnetic flux. Different musical instruments may involve different operating modes, and for the percussion instrument of this embodiment, the operating mode may include: striking the drumhead, stroking the drumhead, or striking area the drumhead or the like. In this operating mode, the training signal collected by the detection circuit may include a position signal and an operating mode signal. In addition, a force signal of striking area the drumhead can also be obtained by arranging a pressure sensor under the drumhead.

In one implementation scenario, the detection circuit may further include a timer to detect whether the student operates accurately at each time point during the performance and whether the overall performance time is qualified. For example, a certain key should be pressed at the 18th second during performance, but the key is not pressed when the timer counts to the 18th second, which indicates that the student's action at this time point is erroneous, and the training module will collect the erroneous action. For example, if the complete playing time of a song is 3 minutes and 20 seconds, but the actual playing time of the student is 3 minutes and 18 seconds, it indicates that the performance of the student is unqualified, and there should be an error/errors at a certain time point/certain time points. In this case, the training module will collect the erroneous action(s) at the certain time point(s), and collect a difference of "2 seconds" in the overall performance time. In addition, a rhythm signal may be a time point of each playing action, and when a time point of an actual playing action of the student does not coincide with a time point of the corresponding reference signal, it indicates that the student's rhythm is wrong now.

As for the training signals, the different types of detection circuits used in the present disclosure may acquire different kinds of training signals, so that the obtained training signals have multi-dimensional attributes. Accordingly, the reference signal and the correction signal may also be multidimensional, where dimensions here may include: position, force, operating mode and rhythm. The training signal, the reference signal, and the correction signal may each include one or more of a position signal, a force signal, an operating mode signal, or a rhythm signal.

In one embodiment, when the reference signal is a multi-dimensional signal, the reference signal is generated as follows: first, a certain piece of music is played by a veteran player on a musical instrument equipped with the training module, and a training signal set is generated each time the piece of music is played. After multiple times of playing, a plurality of training signal sets for the piece of music are generated. Further, the plurality of training signal sets are used as samples, and signals on at least one dimension included in the training signals of each step are subjected to normal distribution processing to obtain a set of multi-dimensional reference signals of that piece of music. Accordingly, the specific workflow of the processing module is as follows: first, the training signals are compared with the reference signals in at least one dimension to find out a training signal different from the reference signal, and finally, a correction signal generated by comparing the training signal with the reference signal is transmitted to the correction module.

It will be understood that the different types of detection circuits used in the present disclosure may acquire training signals of the student at multiple dimensions to tutor the student more accurately. Meanwhile, the different types of detection circuits may also be adapted to various kinds of musical instruments. According to different application scenarios, the musical instrument may be one or more of a piano, an electronic organ, a xylophone, a vibraphone, marimbas, chimes, a drum set, a Chinese drum or any other musical instrument.

FIG. 5 is a schematic structural diagram of a light-emitting assembly 500 according to an embodiment of the present disclosure.

As shown in FIG. 5, the light-emitting assembly of the present disclosure may include a first light-emitting assembly 501, a second light-emitting assembly 502, a third light-emitting assembly 503, and a fourth light-emitting assembly 504. According to different implementation scenarios, the number and layout of light-emitting assemblies may be configured according to the type of the musical instrument. In one embodiment, the first, second, and third light-emitting assemblies show in FIG. 5 may be arranged under a drumhead and connected with each other into a circular ring shape, and divide the drumhead into a rim region, a middle region, and a center region. When the first light-emitting assembly is lit up, the correction signal is now a position signal to remind a student of striking a position of the first light-emitting assembly. Likewise, when the second or third light-emitting assembly is lit up, the student is reminded of striking a position of the second or third light-emitting assembly.

In one embodiment, the fourth light-emitting assembly may be disposed on a side of the drumhead, and serves as a light-emitting assembly that reminds the student of a force to beat the drumhead. This light-emitting assembly is a light strip that may include a plurality of single lamps connected in sequence. When the musical instrument is played, the single lamps are sequentially lit up from one end of the light strip, and the more the single lamps are lit up, the stronger the force signal is. When a maximum force is desired, all the single lamps are lit up; and when no force signal is received, the light strip is not lit up.

It will be understood that for the light-emitting assembly, the correction module converts the correction signal into a control signal for controlling the light-emitting assembly, and further, the light-emitting assembly may be arranged on the musical instrument and transmit an optical signal according to the control signal, so that a student can be intuitively and directly guided to play. According to different application scenarios, various types of correction signals may be used and converted into different control signals, and further, the light-emitting assembly transmits diversified light signals according to the different control signals, where different light signals represent different prompts. While playing the musical instrument, the student may be reminded of whether a key is correctly pressed through a state of the light-emitting assembly arranged above the key. For example, if a key is not pressed at a prescribed time point, the light-emitting assembly above the key will be lit up to alert the student that the key needs to be pressed at that time point. In addition, the light-emitting assembly may be turned off after being lit up for a certain time period, for example, 0.5 seconds.

In a different application scenario, the light-emitting assembly may be a single lamp, or a lamp set composed of a plurality of single lamps, or a liquid crystal display, an optical assembly composed of optical fibers, or any other device that can emit light through an electric or optical signal. Further, the light-emitting assembly may emit one color of light or multiple colors of light, and may communicate different correction signals to the student through changes of color. In one embodiment, orange light indicates a too large striking force; red light indicates a missed action; yellow light indicates an insufficient force; and blue light indicates a non-matched operating mode.

In one embodiment, different light-emitting assemblies may have different shapes. As shown in FIG. 5, the first, second and third light-emitting assemblies are shaped to fit the drumhead and removably connected to the drumhead. The teaching system of the present disclosure can flexibly transfer the first to fourth light-emitting assemblies to different drumheads according to the actual requirements of the user, thereby improving the adaptation rate and utilization rate of the musical instrument teaching system and facilitating selling or renting.

It can be seen that the correction signal may be used for correcting the operating position, force, operating mode, rhythm and the like of the student during performance, and the light-emitting assembly may indicate different correction actions to the student with different light-emitting patterns. With the diversified correction signals, the musical instrument teaching system of the present disclosure can be adapted to various musical instruments, and thereby can accurately guide the performance of the student from multiple dimensions.

In another embodiment, the diversified correction signals may be delivered to the student by the light-emitting assembly emitting light, or delivered to the student through the display terminal discussed above. The display terminal may be a television, a computer, a mobile phone or a projection device, or the like, and may be configured to output playing instruction information to the student to guide his/her performance, or configured to play a performance video to the student. The performance video may include, but is not limited to, the following information: 1. a target score or note; 2. demonstration of an expression method of the target score or note; and 3. information, such as performance progress, accompanied with the target score or note. Further, the playing instruction information and the correction signal may be a textual evaluation report.

When the musical instrument teaching system of the present disclosure is practically applied to teaching, a correction signal may be fed back to a beginner in real time by the light-emitting assembly emitting light, so that the beginner can correct his/her error immediately in the learning process. In addition, for a student with certain experiences, an evaluation report may be fed back to the student when the whole performance is finished so that the student can correct and further practice his/her performance based on the errors indicated in the report.

In one embodiment, the storage module and the processing module in the teaching system of the present disclosure may be arranged in a stand-alone system, a server system or a cloud server system according to actual needs. As can be seen from the description here, the arrangement of the storage module and the processing module of the present disclosure is very flexible, where both can be arranged locally (i.e., at the same location as the instrument) or remotely (i.e., at a greater distance from the instrument), or both can be arranged at the same location, or arranged in a separated manner.

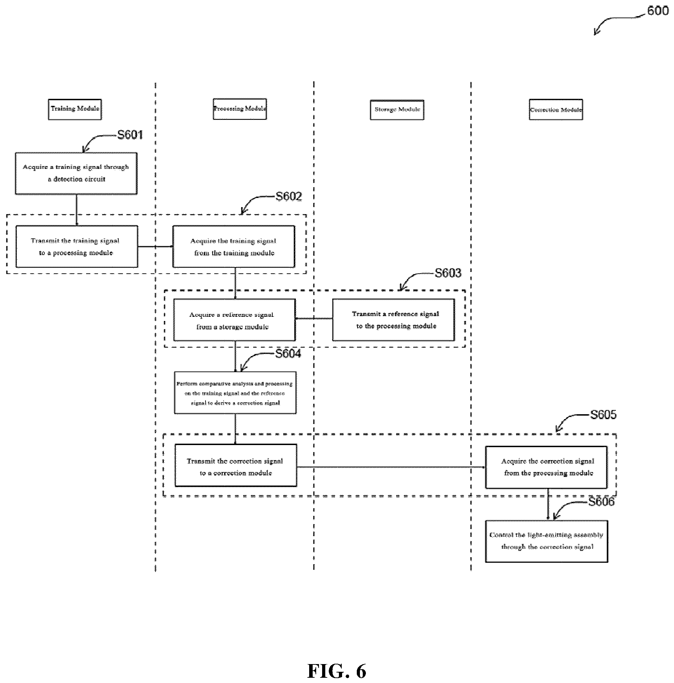

FIG. 6 is a flowchart of an instrument teaching method 600 according to an embodiment of the present disclosure.

As shown in FIG. 6, in one embodiment, the musical instrument teaching method 600 of the present disclosure may include the following steps S601 to S606.

At step S601: a detection circuit arranged at a musical instrument collect a training signal generated by a playing action of a student on the musical instrument during performance.

At step S602: a training module transmits the training signal to a processing module.

At step S603: the processing module acquires a reference signal from a storage module. As discussed above, the reference signal here may be a playing action signal that is played by a performance teacher in advance and correctly collected.

At step S604: the processing module compares the reference signal with the training signal (including the various desired analysis and processing as exemplified above) to derive a correction signal for correcting the student. In one implementation scenario, the training signal may be compared with the reference signal in a time dimension (i.e., on the basis of the same time point). When the training signal and the reference signal at the same time point are different, the reference signal may be directly used as a correction signal to correct the error of the student.

At step S605: the analyzed correction signal is transmitted to a correction module as a result. The analysis result here includes a specific type of reference signal, such as a position signal, a force signal or a rhythm signal. In addition, the analysis result may further include a specific force value of the force signal.

At step S606: the correction module receives the correction signal, and transmits the correction signal to a corresponding light-emitting assembly. For example: if the correction signal is a position signal, the correction signal is transmitted to a light-emitting assembly for prompting the position; if the correction signal is a force signal, the correction signal is transmitted to a light-emitting assembly for prompting the force, while the light-emitting assembly for prompting the force performs a corresponding lighting action according to the specific force value contained in the correction signal; and further, the light-emitting assembly emits light according to the indication of the correction signal, and visually present the correction signal to the student, to assist the student in performing a corresponding correction action.

In one implementation scenario, the correction signal obtained in step S604 may be fed back to the student in real time. In other words, the light-emitting assembly emits corresponding light to prompt the student immediately after the student makes an incorrect action. In another implementation scenario, the processing module may collect the correction signals generated during the performance and integrate the correction signals into an evaluation signal at the end of the entire piece of music. In one implementation, the evaluation signal may include a set of correction signals distributed over different time points. When the performance is finished, the processing module may generate an evaluation report based on the evaluation signal and transmit the evaluation report to the student, to indicate errors and deficiencies in the performance to the student in the form of the evaluation report.

The working principle of the musical instrument teaching system of the present disclosure will be further described below by taking an example in which a student practices on a piano. It should be noted that, for the purpose of simplifying the description below, the reference signal is regarded as the correction signal in the present disclosure, which means that when there is a difference between the training signal and the reference signal, the reference signal is directly selected as the correction signal for correcting the playing action of the student. Furthermore, each key of the piano is provided with an LED for prompting a playing position and an LED strip for prompting a pressing force. The LED strip includes 10 LEDs arranged in parallel. When all the LEDs in the LED strip are lit up, it represents a force of 1N, when nine LEDs are lit up, it represents a force of 0.9N, so on and so forth, and when one LED is lit up, it represents a force of 0.1N. A timer and a pressure sensor are arranged under the key.

First, a student plays a piece of music, and rhythm signals, position signals and force signals generated during the performance are collected by the timer and the pressure sensor in the training module. Then, the training module transmits the rhythm signals, the position signals and the force signals to the processing module. The processing module retrieves reference signals of the piece of music from the storage module, where the reference signals also include rhythm signals, position signals and force signals. Then, the processing module performs comparative analysis on the rhythm signal, the position signal and the force signal at each time point during the performance of the student with the rhythm signal, the position signal and the force signal in the reference signal at the same time point. In other words, the rhythm signal in the training signal is compared with the rhythm signal in the reference signal; the position signal in the training signal is compared with the position signal in the reference signal; and the force signal in the training signal is compared with the force signal in the reference signal.

After the above comparative analysis, when the signal at any dimension (including rhythm, position and force) in the training signal is different from the signal at that dimension in the reference signal of the same time point, the signal of that dimension in the reference signal is taken as the correction signal. For example, at the time point of 2 minutes and 5 seconds of the piece of music, the student should play the D key in the bass region, but the timer and the pressure sensor detects that at that time point, the C key, instead of the D key, in the bass region is pressed, so the position signal in the training signal is different from the position signal in the reference signal. Therefore, the correction signal is therefore the position signal in the reference signal at the time point of 2 minutes and 5 seconds. Further, the processing module transmits the position signal as a correction signal to a light-emitting assembly for prompting the operating position, which is an LED above the D key in the bass region. Finally, the LED above the D key is lit up to prompt the student that the key should be pressed.

For another example, at the time point of 1 minute and 8 seconds of the piece of music, the student should play the A key in the bass region with a force of 1N, but the timer and the pressure sensor detects that at that time point, the A key in the bass region is pressed with a force of 0.5N, so the force signal in the training signal is different from the force signal in the reference signal. Therefore, the correction signal is therefore the force signal in the reference signal at the time point of 1 minute and 8 seconds. Further, the processing module transmits the force signal (including the force value) as a correction signal to a light-emitting assembly for prompting the operation force, which is an LED strip above the A key in the bass region. Finally, the entire LED strip above the A key is lit up to prompt the student that the key should be pressed with a greater force at the time point of 1 minute and 8 seconds.

The musical instrument teaching method of the present disclosure provided based on the above solution can collect training signals of the student during performance and practices in real time, while feeding back intuitive correction signals for guiding the student, so that the student can still receive intuitive guidance directly reflected to the musical instrument in real time during independent training, thereby enabling bidirectional communication between teaching and learning and obtaining a better teaching effect.

In addition, the present disclosure further provides a computer-readable storage medium. The computer-readable storage medium may include program instructions for musical instrument teaching, which, when executed by a processor, cause the musical instrument teaching method as described above to be implemented.

It should be understood that the terms "first," "second," "third," and "fourth," and the like in the claims, description, and drawings of the present disclosure are used to distinguish between different objects, and are not used to describe a particular order. The terms "comprise" and "comprising," when used in the description and claims of the present disclosure, specify the presence of the stated features, integers, steps, operations, elements, and/or components, but do not preclude the presence or addition of one or more other features, integers, steps, operations, elements, components, and/or groups thereof.

It is also to be understood that the terminology used in the description of the present disclosure here is for the purpose of describing particular embodiments only, and is not intended to be limiting of the present disclosure. As used in the specification and claims of the present disclosure, the singular forms "a", "an" and "the" are intended to include the plural forms as well, unless the context clearly indicates otherwise. It should be further understood that the term "and/or" as used in the description and claims of the present disclosure refers to any and all possible combinations of one or more of the associated listed items and includes such combinations.

As used in the description and the claims, the term "if" may be interpreted contextually as "when..." or "once" or "in response to determining" or "in response to detecting." Similarly, the phrase "if it is determined" or "if [the described condition or event] is detected" may be interpreted contextually as meaning "upon determining" or "in response to determining" or "upon detecting [the described condition or event]" or "in response to detecting [the described condition or event]."

Although the implementations of the present disclosure have been described above, they are merely the embodiments used for facilitating understanding the present disclosure, and are not intended to limit the scope and application scenarios of the present disclosure. Any skilled person in the art of the present disclosure can make any modification and variation in implementation forms and details without departing from the spirit and scope revealed in the present disclosure, but the patent protection scope of the present disclosure shall still be subject to the scope defined in the attached claims.

## Claims

1. A musical instrument teaching system, comprising:
a training module arranged at a musical instrument and configured to acquire a training signal generated by a playing action of a student on the musical instrument during performance;
a storage module configured to store a reference signal generated by a playing action on the musical instrument;
a processing module configured to generate a correction signal for correcting the playing action of the student based on a comparison between the training signal and the reference signal, wherein the correction signal is associated with at least one correction action; and
a correction module arranged at the musical instrument and configured to:
receive the correction signal from the processing module; and
visually present the correction signal to the student, to assist the student in performing a corresponding correction action.

2. The musical instrument teaching system of claim 1, wherein the training module includes a detection circuit arranged in a playing or striking area zone of the musical instrument and configured to detect a playing action of the student in the playing or striking area zone and generate a corresponding training signal.

3. The musical instrument teaching system of claim 2, wherein the detection circuit includes one or more of: a vibration sensor, a micro-electromechanical system (MEMS) sensor, a magnetic induction circuit, a capacitive induction circuit, an ultrasonic sensor, or an optical sensor.

4. The musical instrument teaching system of claim 2, wherein the training module includes a timer configured to collect a rhythm signal generated by the playing action of the student in the playing or striking area zone.

5. The musical instrument teaching system of any one of claims 1 to 4, wherein the correction module includes a light-emitting assembly arranged at the musical instrument and configured to indicate different correction actions to the student with different light-emitting patterns.

6. The musical instrument teaching system of claim 5, wherein the correction signal includes a correction signal for correcting one or more of a position, a force, or a rhythm of the playing action of the student on the musical instrument.

7. The musical instrument teaching system of claim 6, wherein the correction module has a shape that conforms to the musical instrument, and is removably connected to the musical instrument.

8. The musical instrument teaching system of claim 6 or 7, further comprising a display terminal configured to output playing instruction information and/or a correction signal to the student to guide performance of the student, wherein the storage module and/or the processing module are arranged at a cloud server.

9. A musical instrument teaching method, comprising:
collecting a training signal generated by a playing action of a student on a musical instrument during performance;
generating a correction signal for correcting the playing action of the student based on the training signal and a reference signal, wherein the correction signal is associated with at least one correction action, and the reference signal is a signal generated by a playing action on the musical instrument; and
receiving the correction signal at the musical instrument, and visually presenting the correction signal to the student, to assist the student in performing a corresponding correction action.

10. A computer-readable storage medium having program instructions for musical instrument teaching stored thereon which, when executed by a processor, cause the method of claim 9 to be implemented.
